# EUROPEAN PATENT APPLICATION

(11) **EP 2 159 871 A1**
(43) Date of publication of application: **03.03.2010**
(21) Application number: 08164331.4
(22) Date of filing: 15.09.2008
(51) Int. Cl.: H01Q 1/12, H01Q 1/32, B60Q 1/26, H01F 7/02

(54) **Magnetic base for mounting signal transmission devices onto the car body**

(30) Priority: 29.08.2008 CN 200820110307 U
(71) Applicant: Guangzhou SAT Infrared Technology Co., Ltd., Guangzhou 510730 (CN)
(72) Inventor: Wu, Jiping, c/o Guangzhou SAT Infrared Technology Co. Ltd., 510730 Guangzhou (CN)
(74) Representative: Gervasi, Gemma

(57) **Abstract**

A magnetic base for mounting signal transmission device onto the body of vehicle comprises a rubber pad (21) which has a first bottom surface (25) and a second bottom surface (26), wherein a connecting portion is arranged on the first bottom surface (25); and a plurality of magnets (22) are arranged on the second bottom surface (24) of the rubber pad (21). The adaptability of the magnetic base is improved by means of a construction of rubber base with magnetic force. It is much more convenient for the user.

## Description

### Field of the invention

The present invention relates to the technical field of the parts for electronic devices, especially to a magnetic base for mounting signal transmission device onto the car body.

### State of the art

Currently, along with the development of the signal transmission technology, there are plenty of signal transmission devices, such as infrared thermal imager, communication antenna, meteorological signal transmission device, etc., equipped in the automobiles for the driver to have much more information. The signal transmission devices are mostly fixed somewhere onto the car body with screw and bolt directly. The places for mounting the devices are predetermined during the manufacturing car body. This keeps the user from freely mounting the signal transmission devices to the other places of the car. It is bothersome for the user to mount or to disassemble the devices. Besides, the material of the conventional base for mounting signal transmission devices is rigid and lacks of flexibility. This forces the signal transmission devices to be mounted on the place where is more or less even. The usability of the signal transmission devices is thus reduced. It is also troublesome for the user to use the device properly.

### Description of the invention

The object of the present invention is to provide a magnetic base for mounting signal transmission device onto the car body for solving aforementioned problems. The usability of the magnetic base will be enhanced by a construction with soft magnetic base. It is more convenient for the user.

The present invention provides a magnetic base for mounting signal transmission device onto the car body in order to achieve the aforementioned object, comprising:
a rubber pad, comprising a first and a second bottom surface, wherein a connector is provided on the first bottom surface; and
a plurality of magnets arranged on the second bottom surface of the rubber pad.

Preferably, the connector is formed as four convex blocks with through holes.
Preferably, a plurality of grooves is formed in the second bottom surface of the rubber pad.

One of the embodiments has following advantages: by using the magnetic rubber pad the adaptability of the magnetic base is improved; the signal transmission device can be easily fixed onto the car body. It is much more convenient for the user.

### Description of the drawings

Figure 1 is a perspective view of the magnetic base of an embodiment according to the present patent application.
Figure 2 is a top view of the magnetic base of the embodiment according to the present patent application.
Figure 3 is a side view of the magnetic base of the embodiment according to the present patent application.

### Description of the invention

The object, technical solutions, and advantageous of the present invention can be well understood by the following detailed description with reference to the drawings and embodiments. The illustrated embodiments and the description of the present patent application are used to explain, but not to restrict, the present invention.

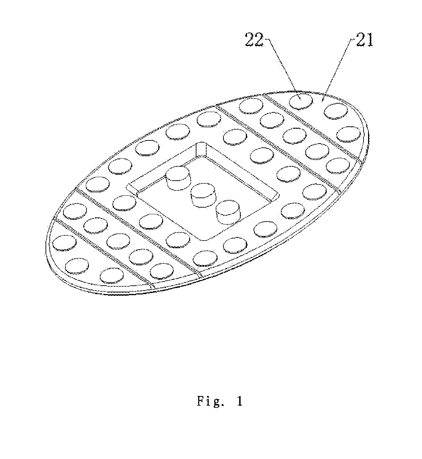

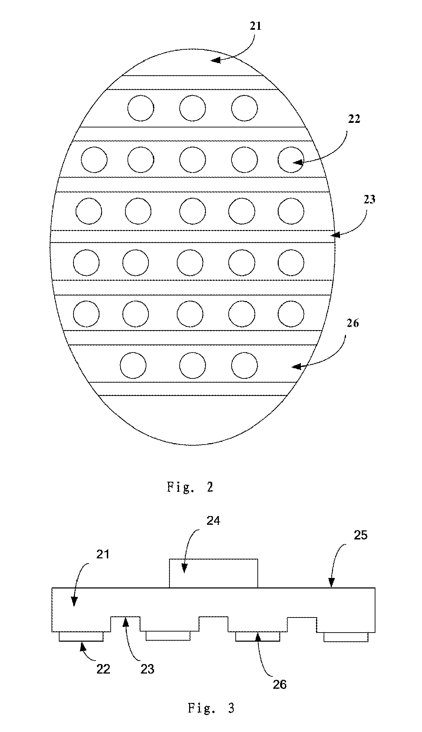

As shown in figures 1 to 3, the magnetic base comprises: an elliptical rubber pad 21 and a plurality of round magnets 22. The rubber pad 21 comprises a first bottom surface 25 and a second button surface 26. A connector 24 is provided on the first bottom surface 25. The plurality of magnets 22 are arranged on the second bottom surface 26 of the rubber pad. For example, the magnets 22 can be adhered to the second bottom surface 26 of the rubber pad 21 with some gooey stuff, or can be embedded into the rubber pad 21, so that the magnetic base can be magnetically attached onto the surface where the device is to be installed, for example to the car body of automobile.

The second bottom surface 26 of the rubber pad 21 is provided with a plurality of grooves 23 so that the rubber pad 21 of the magnetic base can have a good flexibility to increase the adaptability of the rubber pad 21 onto the shape of the surface, where is to be attached.

If the surface to be attached is buckled with a certain curve, for example the bar body of a vehicle, the magnetic base can be attached to the curved surface thoroughly due to the flexibility of the magnetic base, by means of soft material of the magnetic base. The usability of the magnetic base gets thus broader.

The magnetic base for mounting signal transmission devices onto the body of vehicle according to the present invention can be used for the signal transmission devices such as infrared thermal imager, communication antenna, and meteorological sensor and to fix these devices onto the body of vehicle. The signal transmission device is connected to the connecting portion 24 of the magnetic base by a connecting member, and then attached onto the body of the vehicle by means of magnetic force of the magnet 22 on or in the magnetic base. The location for installing, for example on the top of the vehicle or on the front part of the vehicle, can be chosen by the user according to his practical needs. Furthermore, since the magnetic base is provided with a flexible rubber pad, the signal transmission device can be mounted onto the body of the vehicle where is a curved surface. Thus, the user can mount the signal transmission device in several different positions of the body of vehicle. It is much more convenient for the user.

The embodiment described above is a preferred embodiment. It should be noted that some variations and modifications can be made by the person skilled in the art to the embodiment which are within the principle of the invention. These variations and modifications still fall into the protection scope of the present invention.

## Claims

1. Magnetic base for mounting signal transmission device onto the body of vehicle comprising:
a rubber pad comprising a first bottom surface and a second bottom surface, wherein a connecting portion is arranged on the first bottom surface; and
a plurality of magnets arranged on the second bottom surface of the rubber pad.

2. Magnetic base according to claim 1, **characterized in that** the connecting portion is formed by four convex blocks with through holes.

3. Magnetic base according to claim 1, **characterized in that** the second bottom surface of the rubber pad is arranged with a plurality of grooves.
